Europäisches Patentamt

European Patent Office

Office européen des brevets

(19)

(11) Veröffentlichungsnummer: **0 100 048**
**B1**

## (12) EUROPÄISCHE PATENTSCHRIFT

(45) Veröffentlichungstag der Patentschrift:
04.06.86

(21) Anmeldenummer: 83107020.6

(22) Anmeldetag: 18.07.83

(51) Int. Cl.⁴: **C 08 G 65/46**

(54) **Verfahren zur Entfernung des Katalysators aus Polyphenylenethern.**

(30) Priorität: 24.07.82 DE 3227745

(43) Veröffentlichungstag der Anmeldung:
08.02.84 Patentblatt 84/6

(45) Bekanntmachung des Hinweises auf die Patenterteilung:
04.06.86 Patentblatt 86/23

(84) Benannte Vertragsstaaten:
BE DE FR GB NL

(56) Entgegenhaltungen:
EP - A - 0 076 993
DE - A - 2 702 185
DE - A - 2 746 904
DE - A - 2 755 937
US - A - 4 130 504

Patent Abstracts of Japan, Band 3, Nr. 75, 27. Juni 1979,
Seite 30C50
Patent Abstracts of Japan, Band 3, Nr. 114, 21.
September 1979, Seite 29C59

Die Akte enthält technische Angaben, die nach dem
Eingang der Anmeldung eingereicht wurden und die
nicht in dieser Patentschrift enthalten sind.

(73) Patentinhaber: BASF Aktiengesellschaft,
Carl-Bosch-Strasse 38, D-6700 Ludwigshafen (DE)

(72) Erfinder: Reffert, Rudi Wilhelm, Berliner Strasse 18,
D-6711 Beindersheim (DE)
Erfinder: Hambrecht, Juergen, Dr., Werderstrasse 30,
D-6900 Heidelberg (DE)
Erfinder: Echte, Adolf, Dr., Leuschnerstrasse 42,
D-6700 Ludwigshafen (DE)
Erfinder: Schuster, Hans H., Dr., Luitpoldstrasse 166,
D-6700 Ludwigshafen (DE)
Erfinder: Dreher, Hermann, Dr., Floriansring 16,
D-6104 Seeheim-Jugendheim 1 (DE)

## Beschreibung

Die Erfindung betrifft ein Verfahren zur Entfernung des Katalysators bei der Herstellung hochmolekularer Polyphenylenether aus einwertigen Phenolen, die in den beiden ortho-Stellungen und gegebenenfalls in meta-Position, nicht aber in der para-Stellung Alkylsubstituenten aufweisen, durch oxidative Kupplungsreaktion mit Sauerstoff bei Temperaturen zwischen 15 und 50°C in Anwesenheit eines Katalysatorkomplexes aus einem Metallsalz und einem organischen Amin in Gegenwart eines Lösungsmittels im Bereich von 1:1 bis 20:1 Gewichtsteilen, bezogen auf das monomere Phenol, und gegebenenfalls eines Aktivators und Abtrennung der Metallionkomponente des Katalysators aus der Polyphenylenetherlösung mit komplex- oder chelat-komplexbildenden Verbindungen.

Polyphenylenether und Verfahren zu ihrer Herstellung sind allgemein bekannt und vielfach beschrieben, wie beispielsweise in den US-Patentschriften 3306874, 3306875, 3639656, 3642699 und 3661848.

Die zur Herstellung der Polyphenylenether am häufigsten angewendeten Verfahren umfassen die Selbstkondensation einwertiger Phenole durch Einwirkung von Sauerstoff in Gegenwart von Katalysatoren.

Als Katalysatoren werden bevorzugt Metall-Amin-Komplexe, insbesondere Cu-Amin-Komplexe eingesetzt. Als Lösungsmittel werden vorzugsweise aromatische Kohlenwasserstoffe verwendet. Die Reaktion wird gewöhnlich durch Entfernen des Katalysators aus der Reaktionsmischung beendet. Dies geschieht durch die Verwendung von wässrigen Lösungen von anorganischen oder organischen Säuren wie es z. B. in der DE-OS 2105372 im Gegenstromextraktionsverfahren vorgenommen wird. Verwendet werden auch Polycarbonsäuren und/oder Polyaminocarbonsäuren (vgl. DE-OS 2364319) oder andere Chelatisierungsmittel wie Nitrilotriessigsäure und ihre Natriumsalze oder Ethylendiamintetraessigsäure und ihre Natriumsalze (= Na$_3$ – EDTA) (vgl. DE-OS 2532477) letztere auch in Kombination mit quaternären Ammoniumsalzen (vgl. US-PS 4062870). Beschrieben ist auch die Katalysatorabtrennung mit Hilfe komplexbildender Mittel aus der Gruppe des Bisguanids (vgl. DE-OS 2460325). Neben dem Abbrechen der oxidativen Selbstkondensation hat die Zugabe des komplexbildenden Agens auch die möglichst vollständige Entfernung des Metall-Katalysators aus dem Polyphenylenether zum Ziel, da Verunreinigungen des Polymeren durch Metallreste zu einer Verschlechterung des gesamten Eigenschaftsbildes des Polymeren führen. Insbesondere die Oxidationsempfindlichkeit und die Eigenfarbe werden betroffen.

Alle bisherigen Massnahmen zur Entfernung von Katalysatorresten haben aber den Nachteil, dass zu einer vollständigen Entfernung (Restmenge des Metallions kleiner als 10 ppm) mehrfache Extraktionsschritte bei z. T. komplizierten Trennverfahren angewendet werden müssen. Häufig wird dabei der Charakter des Polyphenylenethers verändert.

Der Erfindung lag deshalb die Aufgabe zugrunde, ein einfaches und hochwirksames Verfahren zur Abtrennung der Katalysatorreste aus den bei der Selbstkondensation einwertiger Phenole entstehenden Reaktionsprodukten zu entwickeln.

Diese Aufgabe wird erfindungsgemäss dadurch gelöst, dass die Komplexierung und die Abtrennung der Metallionkomponente des Katalysators in wässrigem Medium in Gegenwart von 0,1 bis 5000 mg/kg, bezogen auf die organische Lösung des Polyphenylethers, eines anionenaktiven oder nichtionischen Tensides vorgenommen wird.

Unter hochmolekularen Polyphenylenethern werden die durch oxidative Kupplung von 2,6-Dialkylphenol zu einer Kette alkylsubstituierter, in para-Stellung durch ein Sauerstoffatom verbundene Benzolringe verstanden. Die erfindungsgemässen Polymeren weisen Durchschnittsmolekulargewichte aus dem Zahlenmittel ($M_n$) von 10000 bis 90000, bevorzugt 20000 bis 80000, bestimmt nach der in «Macromolecular Synthesis» 1 (1978), Seite 83 angegebenen Methode, auf. Hochmolekulare Polyphenylenether, auch Poly(phenylenoxide) genannt, sind seit längerem bekannt (vgl. z. B. US-PS 3661848; US-PS 3219625 oder US-PS 3378505), so dass sich hier eine weitere Beschreibung erübrigt.

Die zur Herstellung der hochmolekularen Polyphenylenether verwendeten einwertigen Phenole, die in den beiden ortho-Stellungen und gegebenenfalls der meta-Position, nicht aber in der para-Stellung Alkylsubstituenten aufweisen, sind übliche Phenole wie 2,6-Dimethylphenol, 2,6-Diethylphenol, 2-Methyl-6-ethylphenol, 2-Methyl-6-propylphenol, 2,6-Dibutylphenol, 2,3,6-Trimethylphenol sowie Gemische dieser Phenole.

Zur Ausführung der Polykondensation wird üblicherweise Sauerstoff in die 25 bis 50°C warme Lösung des Monomeren in Gegenwart eines Katalysatorkomplexes eingeleitet. Die Sauerstoffdurchflussgeschwindigkeit ist im wesentlichen die gleiche, wie sie in den US-Patentschriften 3306874 und 3306875 beschrieben ist. Nach bekannten Verfahren wird der Katalysator aus Kupfersalz, vorzugsweise Kupfer-I-bromid, Amin und 0,01 bis 5 Gew.-% 2,6-Dimethylphenol in die Vorlage der gelösten Monomeren eindosiert.

Bei dem für die Polykondensation bekannten Katalysatorkomplex handelt es sich üblicherweise um eine Kombination aus einem Amin, z. B. n-Dibutylamin, Diethylamin, Picolin, Chinolin, Pyridinbasen, Triisopropylamin, Dimethylisopropanolamin, Triethanolamin, Triisopropanolamin oder Diisopropanolamin mit einem Kupfersalz wie Kupfer-I-Bromid, Kupfer-I-Chlorid, Kupfer-I-Jodid, Kupfer-II-Acetat, Kupfer-II-Propionat, Kupfer-II-Acetatessigester oder Kupfer-II-Acetylacetonat. Ein bevorzugter Bereich bei der Menge der eingesetzten Amine liegt bei 2,0 bis 25 Mol pro 100 Mol des Monomeren, die Konzentration der Amine kann aber in der Reaktionsmischung innerhalb weiter Grenzen variieren, zweckmässig sind jedoch niedere Konzentrationen. Die Konzentration der Kupfersalze wird gering gehalten und variiert von 0,2 bis 2,5 Mol pro 100 Mol des Monomeren.

Der Anteil des Lösungsmittels liegt üblicherweise im Bereich von 1:1 bis 20:1, d. h. maximal bis zu einem Überschuss des 20-fachen am Lösungsmittel, bezogen auf das Monomere.

Als Lösungsmittel werden Benzol, Toluol, Ethylbenzol und aliphatische Kohlenwasserstoffe, insbesondere $C_6$- bis $C_{10}$-Kohlenwasserstoffe, verwendet.

Darüber hinaus kann die Reaktionsmischung einen Aktivator wie ein Diarylguanidin oder ein Diarylformamidin enthalten (vgl. US-PS 3 544 515).

Die Polykondensationsreaktion wird bei Temperaturen zwischen 15 und 50, insbesondere 15 und 40°C durchgeführt. Hierzu wird der Sauerstoff in die 15 bis 40°C warme Lösung des Monomeren in Gegenwart des Aminkomplexes eingeleitet. Die Reaktion ist in kurzer Zeit beendet, d. h. das Katalysatorgemisch wird in 0,1 bis 1,5 h in die Monomerlösung unter Sauerstoff- oder Luftbegasung eindosiert.

Wenn die Polykondensation die gewünschte Ausbeute und das Polymere das gewünschte Molekulargewicht erreicht hat, enthält die Reaktionslösung 1 bis 30 Gew.-% Polyphenylenether, 0,005 bis 1,5 Gew.-% Metallionen und etwa 0,1 bis 6,0 Gew.-% Amin sowie gegebenenfalls geringe Mengen anderer Materialien.

Erfindungsgemäss werden diese Reaktionslösungen mit metallkomplexbildenden Verbindungen in Anwesenheit von Tensiden zur Abtrennung des in der Polymerlösung enthaltenen Metallkatalysators behandelt.

Als Komplexierungsmittel werden wässrige Lösungen von anorganischen oder organischen Säuren wie es z. B. in der DE-OS 2 105 372, auch Polycarbonsäuren und/oder Polyaminocarbonsäuren (s. DE-OS 2 364 319) oder andere Chelatisierungsmittel wie Nitrilotriessigsäure und ihre Natriumsalze oder Ethylendiamintetraessigsäure und ihre Natriumsalze (= $Na_3$ – EDTA) (s. DE-OS 2 532 477), wie komplexbildenden Mitteln aus der Gruppe des Bisguanids (DE-OS 2 460 325) und anderen komplexbildenden Verbindungen verwendet.

Bevorzugt ist das komplexbildende Agens in solch einer Menge vorhanden, dass auf ein Mol Metallion am Katalysator 0,5 bis 5 Mol komplexbildendes Agens kommen.

Als Tenside werden vorzugsweise nichtionische Verbindungen wie z. B. Blockpolymere von Alkylenoxiden, Ethylendiaminpolyalkylenglykole und Polyalkylenglykolether von Alkoholen, Phenolen und Fettsäuren, und Gemische der Polyglykolverbindungen verwendet.

Vorzugsweise werden sie in Mengen von 0,1 bis 100 mg/kg bezogen auf die Lösung des Polyphenylenethers verwendet.

Die Art und Weise der Zugabe der anionenaktiven oder nichtionischen Tenside ist nicht Gegenstand der Erfindung. Es kann vorteilhaft sein, sie in Form von 0,1 bis 15%igen Lösungen zu dosieren, wobei die Lösungsmittel entsprechend ihren Löslichkeiten Wasser oder Gemische von Wasser und wassermischbaren, organischen Lösungsmitteln wie z. B. Alkohole und deren Mischungen mit aromatischen Lösungsmitteln oder organische Lösungsmittel oder Gemische sein könnnen.

Die Tenside werden zweckmässig in die zu behandelnden Polyphenylenether-Lösungen eingemischt, bevor die wässrigen Lösungen der Metallkomplexierungsmittel angewendet werden. Diese Art der Zugabe ist für die optimale Wirkungsweise dann vorzuziehen, wenn die eingesetzten Tenside nur teilweise oder nicht in Wasser löslich sind oder nur in organischen Lösungsmitteln löslich sind. Es ist aber auch möglich, dass die Tenside gleichzeitig mit (oder nach der Zugabe) den wässrigen Komplexierungsmittel-Lösungen in die zu behandelnden Polyphenylenetherl-Lösungen eingebracht werden, oder in der Komplexiermittel-Lösung gelöst wird. Die Zugabe der Tenside kann auf einmal oder in mehreren Anteilen kontinuierlich oder diskontinuierlich, ggf. mit zusätzlichen Mengen Wasser oder Lösungsmitteln erfolgen. Die Zugabe der Tenside kann bei Temperaturen von 20 bis 90°C erfolgen. Die Kontaktzeiten der Tenside mit den Polyphenylenether-Lösungen können 1 Minute bis mehrere Stunden betragen, wenn die Tenside vor der Anwendung der Komplexierungsmittel-Lösungen eingesetzt werden. Sonst sind im wesentlichen die Kontaktzeiten der Komplexierungsmittel massgebend, die aber aufgrund der speziellen Wirkungsweise der Tenside erheblich verkürzt werden können.

Die Tenside werden in Mengen von 0,1 bis 5000 mg/kg, vorzugsweise von 0,1 bis 100 mg/kg, bezogen auf die Lösungen der Polyphenylenether, verwendet.

Auch die Zugabe der Komplexierungsmittel zu der katalysatorhaltigen Polyphenylenether-Lösung erfolgt nach einfachen Verfahrensweisen. So können die Verbindungen in wässriger Lösung in Form ihrer Alkali-, Ammonium- und/oder Amin-Salze in der erfindungsgemässen Kombination mit den Tensiden hinzugegeben werden. Die Zugabe kann auf einmal oder in mehreren Anteilen kontinuierlich oder diskontinuierlich mit zusätzlichem Wasser erfolgen. Die Abtrennung der Metallkomponente kann dabei in geeigneten Verfahrensvorrichtungen wie z. B. in Dekantationstanks, Flüssig/Flüssig-Zentrifugen und anderen Phasentrennvorrichtungen vorgenommen werden.

Die Kontaktzeit des komplexbildenden Agens in der erfindungsgemässen Kombination mit den Tensiden mit der katalysatorhaltigen Polyphenylenether-Phase kann innerhalb weiter Grenzen variieren. Bevorzugt werden Zeiten von 1 Minute bis 5 Stunden. Häufig genügen 5 bis 60 Minuten. Die bevorzugte Temperatur liegt zwischen 20 und 90°C, es sind jedoch auch Temperaturbereiche darunter und darüber anwendbar.

Als anionenaktive Tenside werden erfindungsgemäss bevorzugt Alkali- oder Ammoniumsalze von Carboxylaten, sulfonierten und sulfatierten Carboxylaten, Carbonsäureestern, Carbonsäureamiden, Alkyl- und Arylsulfonaten, Alkylsulfaten, Arylethersulfaten, Amidoethersulfaten, Succinaten, Sarcosiden, Alkylsulfaten, Sulfobernsteinsäureestern, Ethersulfonaten, Thiosulfaten, Alkyl- und Glycerinphosphaten, Phosphiten, Phosphonaten und Phosphinaten verwendet.

Als nichtionische Tenside werden erfindungsgemäss bevorzugt Polyglykol-Ether, -Ester, -Amide; Arylpolyglykolether; Polypropylenglykol-Ether, -Ester, -Amide; Poly-Alkohole und -Amine; Glycoside; hochmolekulare ethylenoxid- und/oder propylenoxid-haltige Addukte, wie z. B. Blockcopolymere von Alkylenoxiden, Ethylendiamin-Polyalkylen-Glykole sowie Gemische von nichtionischen Tensiden verwendet.

Die Tenside, insbesondere die nichtionischen Tenside können untergeordnete Mengen Korrosionsinhibitoren, z. B. Fettsäureamide, enthalten.

Eine ausführliche Aufzählung der anionischen und nichtionischen Tenside findet sich im Tensid-Taschenbuch; Carl Hanser Verlag, München, Wien; Herausgeber Dr. H. Stache; 2. Ausgabe 1981, Seiten 5 bis 10.

Die Abtrennung der Metallkatalysatoren bis zur vollständigen Entfernung aus dem Polyphenylenether-Polymeren kann durch mehrfach aufeinanderfolgende Zugabe der erfindungsgemässen Kombination von Tensiden und komplexbildenden Verbindungen und anschliessende Abtrennung der resultierenden Metallkomplexe gemäss der bereits beschriebenen Verfahren erfolgen. Bevorzugt wird jedoch eine Ausführungsform der Erfindung, wonach die gesamte Katalysatormenge in einem Komplexier- und Separierschritt aus dem Polymeren entfernt wird.

In einzelnen Fällen kann es zur weiteren Reduzierung des Restmetallgehaltes in der Polyphenylenetherlösung vorteilhaft sein, nach der Komplexierung, mit der ohne vorheriger mechanischer Abtrennung der metallkomplexhaltigen wässrigen Phase, das in der Mischung verbliebene Wasser im Vakuum, bei Normal- oder Überdruck destillativ zu entfernen. Sich dabei aus der Polymerenlösung ausscheidende Anteile, insbesondere Verbindungen des Metallions des Katalysators können dann durch bekannte Methoden der Flüssig-/fest-Trennung z. B. Filtrieren, Zentrifugieren usw. aus der Polymerlösung abgeschieden werden.

Nach der Entfernung der metallischen Komponente als Komplex kann der Polyphenylenether aus der Lösung nach den in den eingangs erwähnten US-Patentschriften beschriebenen Verfahren isoliert werden. Die Isolierung des Polyphenylenethers ist für die vorliegende Erfindung nicht kritisch. So kann z. B. der Polyphenylenether durch Ausfällen aus einer Reaktionslösung mittels einem Antilösungsmittel, wie beispielsweise einem Überschuss von einem Alkohol, z. B. Methanol, isoliert werden. Das filtrierte Produkt kann im Alkohol aufgeschlämmt und – falls gewünscht – mit einem Entfärbungsmittel gerührt werden. Der Polyphenylenether wird dann abfiltriert und nach herkömmlichen Verfahren in Filme, Fasern, ausgeformte Gegenstände und dgl. umgewandelt. Andere Alkohole wie Isopropanol, Propanol oder Ethanol können ebenfalls verwendet werden.

Die Aminkomponente des Katalysators kann durch Destillation oder nach anderen herkömmlichen Verfahren zurückgewonnen werden.

Die mit der Erfindung erzielten Vorteile bestehen insbesondere darin, dass mit Hilfe der Kombination von Tensiden und Komplexierungsmitteln die Metallkatalysator-Reste in den Polyphenylenethern erheblich reduziert werden können. Die resultierenden Polyphenylenether zeichnen sich durch eine verbesserte Farb- und Oxidationsstabilität bei der Verarbeitung im Temperaturbereich über 250°C aus. Die Abtrennung der Metallkatalysatoren nach dem erfindungsgemässen Verfahren ist einfach und erfolgt zumeist in einem Schritt. Dabei können niedrig- und relativ hochkonzentrierte Polyphenylenoxid-Reaktionslösungen (bis zu 25 Gew.-%) ohne Probleme umgesetzt werden. Ein weiterer Vorteil besteht darin, dass die Kombination des Komplexierungsmittels mit dem Tensid einen raschen Ablauf der Komplexierungsreaktion bewirkt und erlaubt in entscheidender Weise ein sehr schnelles, quantitatives Abtrennen der metallkomplexhaltigen, wässrigen Phase ohne störende Emulsionsbildung.

Wie bereits erwähnt, ist ein bevorzugter Aspekt des vorliegenden Verfahrens die Herstellung von Polyphenylenetherlösungen mit niedrigem Metallgehalt, aus denen die polymeren Stoffe nach sog. Totalisolationsverfahren, z. B. durch Sprühtrocknung, Dampfausfällung und Heisswasserzerkrümelung, gewonnen werden können. Diese erleichtert die wirtschaftliche Anwendung solcher Verfahren, die hinsichtlich der erforderlichen Energie, der Lösungsmittelverluste und dgl. wirtschaftlicher sind als die bekannten Ausfällungsverfahren.

Die folgenden Beispiele dienen dazu, die Erfindung zu illustrieren. Die angegebenen Teile sind Gewichtsteile, es sei denn, es ist anders angegeben.

Die Intrinsikviskosität wird durch Messung an 0,5 gew.-%igen Lösungen in Chloroform bei 30°C bestimmt.

Beispiele
Herstellung von Poly-(2,6-dimethyl-1,4-phenylen)-ether:

Eine Vorlage von 1,3 g Cu-I-Bromid und 20 g 1,4-Dimethylpentylamin und 2 g 2,6-Dimethylphenol (= DMP) wird bei 20°C unter stetigem Einleiten von 30 l/h Sauerstoff 5 min gerührt, und dann im Verlauf von 30 min in eine Lösung von 204 g DMP in 1 400 ml Toluol eindosiert. Anschliessend wird noch 1 h bei 20°C gerührt und der Sauerstoffstrom dann abgestellt.

Abtrennung des Metallions aus der polyphenylenetherhaltigen Reaktionsmischung:

Einer bei Reaktionsende 0,53 g Cu/kg enthaltenden polyphenylenetherhaltigen, toluolischen Reaktionslösung wurden unter kräftigem Rühren nacheinander

– 100 mg Tensid in Form einer 2%igen Lösung
– die der 1,1-fachen molaren Menge des in der Reaktionsmischung enthaltenen Kupfers entsprechende Menge der komplexbildenden Verbindung und Wasser zugegeben, so dass dessen Anteil in allen Proben gleichmässig 50 g/kg Reaktionslösung betrug.

Die Mischung von Reaktionslösung und komplexbildender Verbindung bzw. Tensid und komplexbildender Verbindung wurde unter kräftigem Rühren 45 min bei 75°C gehalten. Nach weiteren 15 min Absetzzeit erfolgte die Trennung von wässriger oder öliger Phase im Scheidetrichter. Die Tabelle zeigt vergleichsweise die in der öligen Phase jeweils gemessene Cu-Konzentration.

Tabelle

| Nr. | Tensid | Komplex-bildner | [Cu] mg/kg |
|---|---|---|---|
| 0 | – | – | 530 |
| 1 | – | Na$_2$-EDTA[1] | 33 |
| 2 | Tensid I | Na$_2$-EDTA | 1 |
| 3 | – | Na-NTRA[2] | 40 |
| 4 | Tensid I | Na-NTRA | 1 |
| 5 | Tensid II | Na$_2$-EDTA | 1 |
| 6 | Tensid III | Na$_2$-EDTA | 1 |

[1] Ethylendiamintetraessigsäure-Dinatriumsalz
[2] Nitrilotriessigsäure-Mononatriumsalz

Im folgenden sind die verwendeten Tenside näher charakterisiert:

Tensid I: Hochmolekulares wasserlösliches Block-Copolyalkylenoxid.

Tensid II: Hochmolekulares toluollösliches Oxalkylierungsprodukt der Adipinsäure.

Tensid III: Gemisch aus hochmolekularen wasserlöslichen Oxalkylierungsprodukten von Alkylphenol-Formaldehyd-Harz und Polyamin.

**Patentanspruch**

Verfahren zur Entfernung des Katalysators bei der Herstellung hochmolekularer Polyphenylenether aus einwertigen Phenolen, die in den beiden ortho-Stellungen und gegebenenfalls in meta-Position, nicht aber in der para-Stellung Alkylsubstituenten aufweisen, durch oxidative Kupplungsreaktion mit Sauerstoff bei Temperaturen zwischen 15 und 50°C in Anwesenheit eines Katalysatorkomplexes aus einem Metallsalz und einem organischen Amin in Gegenwart eines Lösungsmittels im Bereich von 1:1 bis 20:1 Gewichtsteilen, bezogen auf das monomere Phenol, und gegebenenfalls eines Aktivators, und Abtrennung der Metallionkomponente des Katalysators aus der Polyphenylenetherlösung mit komplex- oder chelatkomplexbildenden Verbindungen, dadurch gekennzeichnet, dass die Komplexierung und Abtrennung der Metallionkomponente des Katalysators in wässrigem Medium in Gegenwart von 0,1 bis 5000 mg/kg, bezogen auf die organische Lösung der Polyphenylenether, eines anionenaktiven oder nichtionischen Tensids vorgenommen wird.

**Claim**

A method of removing the catalyst in the preparation of a high molecular weight polyphenylene ether from a monohydric phenol, which is alkylsubstituted at the two ortho-positions but not at the para-position and may or may not be alkylsubstituted at the meta-position, by an oxidative coupling reaction with oxygen at from 15 to 50°C in the presence of a catalyst complex obtained from a metal salt and an organic amine, and in the presence of from 1 to 20 parts by weight of a solvent per part by weight of the monomeric phenol, and in the presence or absence of an activator, and isolation of the metal ion component of the catalyst from the polyphenylene ether solution by means of a complex-forming or chelate-forming compound, wherein complex formation and isolation of the metal ion component of the catalyst is carried out in an aqueous medium in the presence of from 0,1 to 5,000 mg of an anionic or non-ionic surfactant per kg of the organic solution of the polyphenylene ether.

**Revendication**

Procédé pour l'élimination du catalyseur lors de la préparation de poly(éthers de phénylène) de poids moléculaire élevé à partir de phénols monovalents qui comportent des substituants alkyle dans les deux positions ortho et éventuellement en position méta, mais non en position para, par réaction de copulation oxydative avec l'oxygène à des températures comprises entre 15 et 50°C, en présence d'un complexe catalyseur formé d'un sel métallique et d'une amine organique et en présence d'un solvant dans une proportion comprise entre 1:1 et 20:1 parties en poids par rapport au phénol monomère et, le cas échéant, d'un activateur, puis séparation du constituant ion métallique du catalyseur d'avec la solution de poly(éther de phénylène) avec des composés complexants ou chélateurs, caractérisé en ce que la complexation et la séparation du constituant ion métallique du catalyseur sont effectuées en milieu aqueux, en présence de 0,1 à 5000 mg/kg, sur la base de la solution organique du poly(éther de phénylène), d'un tenside à activité anionique ou non ionique.